# FASCICULE DE BREVET EUROPEEN

(11) **EP 0 805 093 B1**
(45) Date de publication et mention de la délivrance du brevet: **09.04.2003**
(21) Numéro de dépôt: 97400966.4
(22) Date de dépôt: 29.04.1997
(51) Int. Cl.: B62D 1/19

(54) **Dispositif de positionnement, lors d'un choc, d'une colonne de direction de véhicule automobile**
Posioniereinrichtung einer Kraftfahrzeug-Lenksäule bei einem Stoss
Positioning device of a motor vehicle steering column during a shock

(30) Priorité: 03.05.1996 FR 9605675
(43) Date de publication de la demande: 05.11.1997
(73) Titulaire: NACAM FRANCE SA, 41100 Vendôme (FR)
(72) Inventeur: Duval, Benoît, 41100 Vendome (FR); Gentet, Frédéric, 41100 Vendome (FR); Millet, Pascal, 41100 Meslay (FR)
(74) Mandataire: Cabinet Martinet & Lapoux

(56) Documents cités:
- EP-A- 0 564 898
- EP-A- 0 634 314
- DE-A- 3 433 936
- DE-A- 4 421 509
- GB-A- 2 244 032

## Description

La présente invention se rapporte a un dispositif de positionnement en cas de choc, d'une colonne de direction de véhicule automobile telle que définie dans les préambules des revendications 1 et 2 et correspondant à une colonne de direction réglable d'un type bien connu.
L'installation d'une colonne de direction de véhicule automobile à l'intérieur de l'habitacle, doit répondre à des critères ergonomiques, qui font que l'angle de la colonne de direction par rapport à l'horizontal doit être de l'ordre de 30 degrés. Les exigences de plus en plus sévères de protection du conducteur, en cas d'accident, et notamment en cas de choc frontal, ont amené les constructeurs à prévoir un système à coussin d'air de sécurité, plus communément appelé «air-bag», qui se gonfle presque instantanément, lors d'un choc, afin de protéger le conducteur en recouvrant le volant. Afin que ce système agisse dans les meilleures conditions, il est nécessaire que le volant soit abaissé sur l'horizontale à un angle inférieur à 20 degrés. Il existe des dispositifs de guidage en cas de choc avec une seule rainure comme le document DE-A-3433936, ou avec une zone de réglage munie d'un canal comme le document DE-A-4421509.
Dans ces dispositifs connus, l'angle de l'arbre de direction et du volant avec le plan horizontal est plus faible après rétraction du volant.
Le but de la présente invention est de proposer un dispositif de positionnement, en cas de choc, d'une colonne de direction de véhicule automobile, qui agisse de manière à ce que l'angle de la colonne de direction et du volant avec le plan horizontal soit à la valeur exigée, pour un fonctionnement à des conditions optimales de l'«air-bag», cet angle étant différent de l'angle prévu pour l'utilisation normale.

Selon l'invention, le dispositif de positionnement, lors d'un choc, d'une colonne de direction de véhicule automobile est associé à une colonne de direction incluant un arbre de direction, qui est monté libre en rotation dans un tube-corps. Le tube-corps est disposé dans un élément support, qui est solidaire du châssis du véhicule. Le tube-corps est réglable en hauteur et en profondeur dans le plan vertical, et est bloqué dans l'élément support par un système de réglage en position de ladite colonne de direction. Dans un premier mode de réalisation de l'invention, le dispositif de positionnement comprend des moyens de guidage additionnels du tube-corps en cas de choc comportant une glissière additionnelle de guidage sur le tube-corps, de manière que l'angle de l'arbre de direction et du volant avec le plan horizontal, soit plus faible après rétraction du volant, afin de permettre un fonctionnement à des conditions optimales d'un air-bag. La glissière additionnelle de guidage est agencée sur le carré renfort du tube-corps, dans le prolongement d'une glissière de réglage en profondeur de la colonne de direction. La glissière additionnelle de guidage est inclinée par rapport à la glissière de-réglage en profondeur, d'un angle qui permet un fonctionnement à des conditions optimales de l'air-bag après rétraction.
Dans une autre réalisation de l'invention, les moyens de guidage additionnels consistent en une glissière additionnelle de guidage, qui est agencée sur l'élément support. Cette glissière additionnelle de guidage comprend deux éléments de guidage en forme de «U», qui sont disposés parallèlement l'un par rapport à l'autre sur l'élément support de manière à pouvoir recevoir et maintenir une plaque portée par le carré renfort du tube-corps. La plaque est solidarisée avec les deux éléments de guidage en forme de U par des goupilles-fusibles. Les deux éléments de guidage sont inclinés par rapport à l'élément support d'un angle, qui permet un fonctionnement à des conditions optimales de l'air-bag après rétraction, qui est due à la rupture des goupilles-fusibles provoquées par le choc. Cette rétraction résulte du glissement de la plaque dans les deux éléments de guidage en forme de U.
Dans les réalisations de l'invention, il est particulièrement intéressant que la colonne de direction soit rétractée par un vérin pyrotechnique, qui est piloté par un détecteur de collision. Dans cette architecture, le cylindre du vérin pyrotechnique est monté sur l'élément support, et l'extrémité de la tige du piston est raccordée au tube-corps.
Le dispositif de positionnement, en cas de choc d'une colonne de direction d'un véhicule automobile selon l'invention, présente ainsi l'avantage de positionner la colonne de direction à un angle par rapport à l'horizontale, qui soit plus faible, lors d'un choc, de manière à ce que l'air-bag fonctionne à des conditions optimales. L'invention présente également l'avantage de permettre d'avoir une disposition de la colonne de direction pour l'utilisation normale, qui réponde parfaitement aux conditions ergonomiques. Enfin le dispositif de l'invention peut s'adapter et se monter très facilement dans de nouvelles architectures ou dans des architectures existantes de colonne de direction de véhicule automobile.

D'autres caractéristiques et avantages de l'invention ressortiront de la description qui va suivre, donnée à titre d'exemples nullement limitatifs, en référence aux dessins annexés sur lesquels :
- la figure 1 est une vue en coupe partielle, axiale et verticale d'une colonne de direction de véhicule automobile munie d'un dispositif de positionnement selon l'invention, en utilisation normale sans choc ;
- la figure 2 est une vue analogue à la figure 1 après un choc et rétraction de la colonne de direction ;
- la figure 3 est une vue analogue à la figure 1 d'un autre mode de réalisation de l'invention en utilisation normale sans choc ;
- la figure 4 est une vue analogue à la figure 3, après un choc et rétraction de la colonne de direction ;
- la figure 5 est une vue analogue à la figure 1, d'un autre mode de réalisation de l'invention en utilisation normale sans choc ;
- la figure 6 est une vue analogue à la figure 5, après un choc et rétraction de la colonne de direction ; et
- la figure 7 est une vue partielle en perspective cavalière correspondante à la figure 5.

Comme on peut le voir sur les différentes figures, la colonne de direction de véhicule automobile comporte un arbre de direction 1 qui est monté libre en rotation dans un tube-corps 2. Le tube-corps 2 est disposé dans un élément support 4 qui est solidaire du châssis du véhicule automobile. Le tube-corps 2 est réglable en hauteur et en profondeur dans le plan vertical, et est bloqué dans l'élément support par un système de réglage 5 en position de ladite colonne de direction.

Selon l'invention, le dispositif de positionnement, lors d'un choc, d'une colonne de direction de véhicule automobile comprend des moyens de guidage additionnels du tube-corps 2. Ces moyens de guidage additionnels agissent de manière que l'angle de l'arbre de direction 1 et du volant avec le plan horizontal, soit plus faible après rétraction du volant, afin de permettre un fonctionnement correct et à des conditions optimales d'un coussin d'air de sécurité. Ce coussin d'air de sécurité est plus communément appelé air-bag, et c'est le terme qui sera utilisé dans la suite de la description.

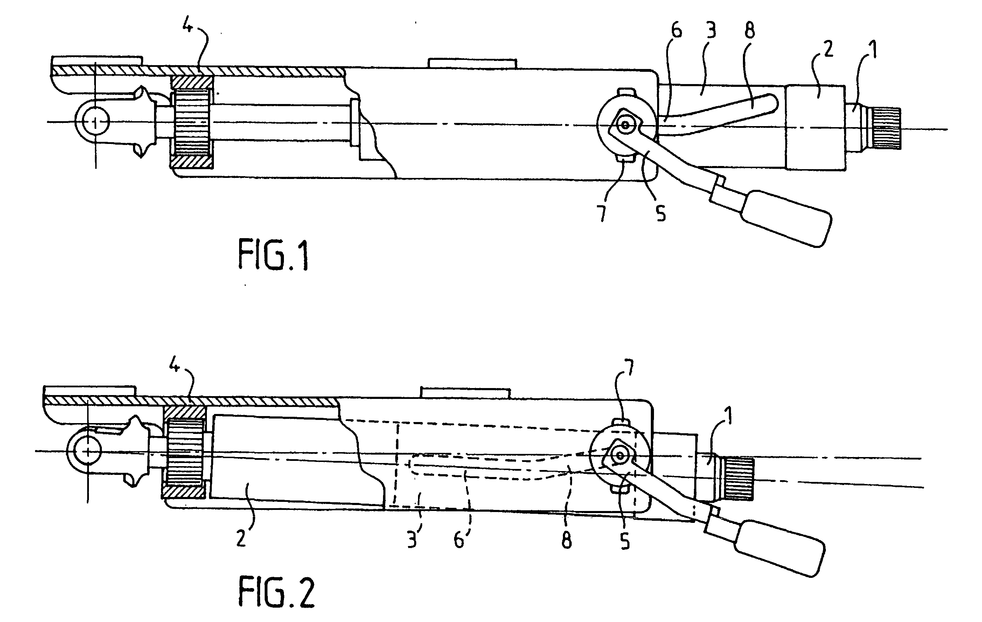

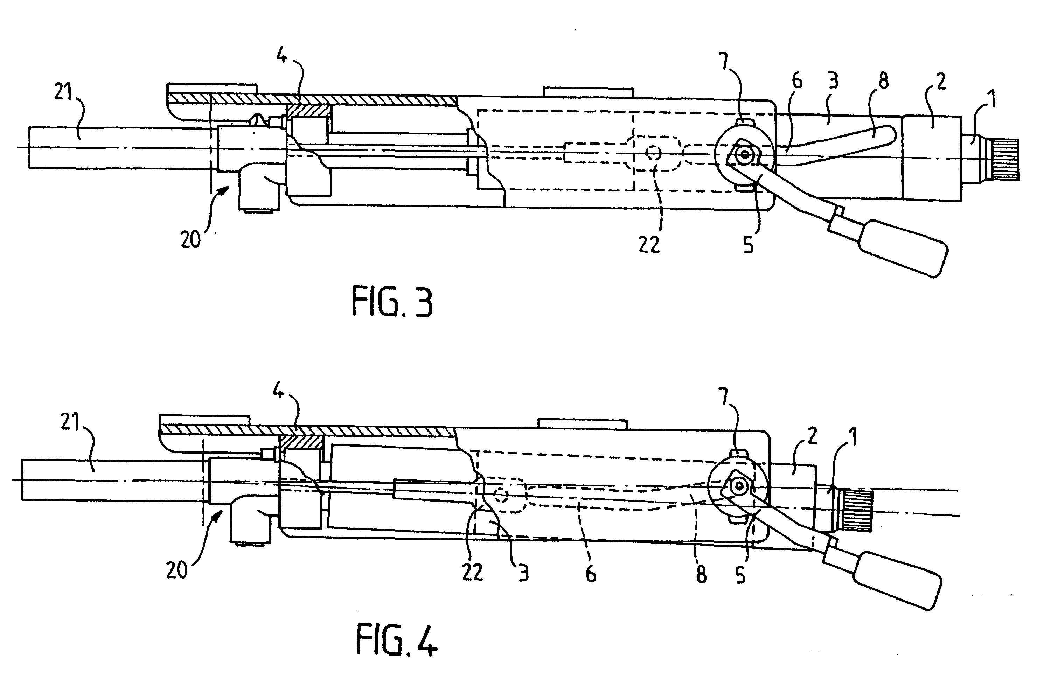

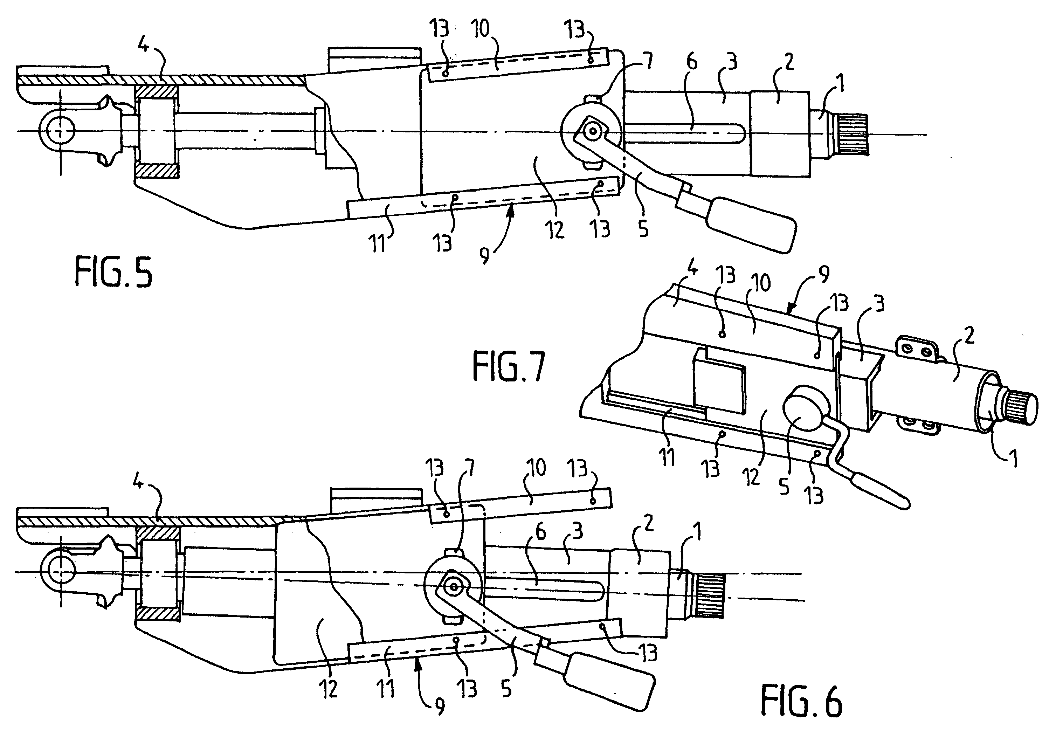

Dans les réalisations de l'invention représentées sur les figures 1 à 4, les moyens de guidage additionnels consistent en une glissière additionnelle de guidage 8, qui est agencée sur le tube-corps 2. Plus précisément, la glissière additionnelle de guidage 8 est agencée sur un carré renfort 3 solidaire du tube-corps 2. La glissière additionnelle de guidage 8 est disposée dans le prolongement de la glissière de réglage en profondeur 6, du système de réglage 5 en position de la colonne de direction. Le système de réglage en position 5 comporte également une glissière de réglage en hauteur 7 agencée sur l'élément support 4. Selon la caractéristique essentielle de l'invention, la glissière additionnelle de guidage 8 est inclinée par rapport à la glissière de réglage en profondeur 6 d'un angle qui permet un fonctionnement correct de l'air-bag sous des conditions optimales après rétraction de la colonne de direction.
La position de la colonne de direction après rétraction et choc est représentée clairement sur les figures 2 et 4 où peut être vue la nouvelle position en inclinaison par rapport à l'horizontale de la colonne de direction.
Dans la réalisation de l'invention représentée sur les figures 3 et 4, la colonne de direction est rétractée par un vérin pyrotechnique 20, qui est piloté par un détecteur de collision. Dans cette réalisation, le cylindre 21 du vérin pyrotechnique 20 est monté sur l'élément support 4, et l'extrémité 22 de la tige du piston est raccordée au tube-corps 2. Lors d'un choc à une valeur prédéterminée, le détecteur de collision pilote le vérin pyrotechnique, de manière à envoyer le gaz généré par l'explosion sur le piston pour manoeuvrer le tube-corps 2.
Dans la réalisation de l'invention représentée sur les figures 5 à 7, les moyens de guidage additionnels consistent en une glissière additionnelle de guidage repérée 9 qui est agencée sur l'élément support 4. Cette glissière additionnelle de guidage 9 sur l'élément support 4 comprend deux éléments de guidage en forme de «U» 10 et 11, l'élément de guidage 10 étant disposé à la partie supérieure et l'élément de guidage 11 étant disposé à la partie inférieure. Ces deux éléments de guidage 10 et 11 sont mis en place parallèlement l'un par rapport à l'autre, et sont disposés de manière à pouvoir recevoir et maintenir une plaque 12. La plaque 12 est portée par le carré renfort 3 du tube-corps 2 avec lequel elle est solidaire. La plaque 12 est solidarisée avec les deux éléments de guidage 10 et 11 en forme de U par des goupilles-fusibles 13. De plus, les deux éléments de guidage 10 et 11 sont inclinés par rapport à l'élément support 4, d'un angle qui permet un fonctionnement de l'air-bag sous des conditions optimales, après rétraction de la colonne de direction. Cette rétraction est rendue possible par la rupture des goupilles-fusibles 13, qui est provoquée par le choc. La rétraction est guidée par le glissement de la plaque 12 dans les deux éléments de guidage en forme de U 10 et 11.

## Revendications

1. Dispositif de positionnement, lors d'un choc, d'une colonne de direction de véhicule automobile, ladite colonne de direction comportant un arbre de direction (1) monté libre en rotation dans un tube-corps (2) disposé dans un élément support (4) solidaire du châssis du véhicule, ledit tube-corps (2) étant bloqué dans ledit élément support (4) par un système de réglage (5) en position de ladite colonne de direction, **caractérisé en ce que** ledit dispositif de positionnement comprend des moyens de guidage additionnels du tube-corps (2) en cas de choc, qui comportent une glissière additionnelle de guidage (8) agencée sur le carré renfort (3) du tube-corps (2), dans le prolongement d'une glissière de réglage en profondeur (6), et **en ce que** ladite glissière additionnelle de guidage (8) est inclinée par rapport à ladite glissière de réglage en profondeur (6), de manière que l'angle de l'arbre de direction (1) et du volant du véhicule avec le plan horizontal soit plus faible après rétraction du volant, afin de permettre un fonctionnement correct d'un air-bag.

2. Dispositif de positionnement, lors d'un choc, d'une colonne de direction de véhicule automobile, ladite colonne de direction comportant un arbre de direction (1) monté libre en rotation dans un tube-corps (2) disposé dans un élément support (4) solidaire du châssis du véhicule, ledit tube-corps (2) étant bloqué dans ledit élément support (4) par un système de réglage (5) en position de ladite colonne de direction, **caractérisé en ce que** ledit dispositif de positionnement comprend des moyens de guidage additionnels du tube-corps (2) en cas de choc, qui comportent une glissière additionnelle de guidage (9) sur l'élément support (4), agencée sur l'élément support (4) et comprend deux éléments de guidage en forme de «U» (10 et 11) disposés parallèlement l'un par rapport à l'autre sur l'élément support (4), de manière à pouvoir recevoir et maintenir une plaque (12) portée par le carré renfort (3) du tube-corps (2), la plaque (12) étant solidarisée avec les deux éléments de guidage (10 et 11) en forme de U par des goupilles-fusibles (13) ; les deux éléments de guidage (10 et 11) étant inclinés par rapport à l'élément support (4) d'un angle permettant un fonctionnement correct de l'air-bag, après rétraction due à la rupture des goupilles-fusibles (13) provoquée par le choc, ladite rétraction résultant du glissement de la plaque (12) dans les deux éléments de guidage en «U» (10 et 11), de manière que l'angle de l'arbre de direction (1) et du volant du véhicule avec le plan horizontal soit plus faible après rétraction du volant, afin de permettre un fonctionnement correct d'un air-bag.

3. Dispositif de positionnement selon l'une quelconque des revendications précédentes, **caractérisé en ce que** la colonne de direction est rétractée par un vérin pyrotechnique (20) piloté par un détecteur de collision.

4. Dispositif de positionnement selon la revendication 3, **caractérisé en ce que** le cylindre (21) du vérin pyrotechnique (20) est monté sur l'élément support (4), et l'extrémité (22) de la tige du piston est raccordée au tube-corps (2).

## Claims

1. A device for positioning an automobile vehicle steering column in the event of an impact, said steering column including a steering shaft (1) freely rotatable in a tube-body (2) disposed in a support member (4) attached to the chassis of the vehicle, the tube-body (2) being locked in said support member (4) by a system for adjusting (5) the position of said steering column, **characterized in that** said positioning device comprises additional guide means for the tube-body (2) in the event of an impact, which comprise an additional guide slide (8) disposed on the reinforcing member (3) of the tube-body (2), aligned with a depthwise adjustment slide (6), and **in that** said additional guide slide (8) is inclined to said depthwise adjustment slide (6) such that an angle of the steering shaft (1) and the steering wheel of the vehicle with respect to the horizontal plane is smaller after retraction of the steering wheel in order to allow correct operation of an air-bag.

2. A device for positioning an automobile vehicle steering column in the event of an impact, said steering column including a steering shaft (1) freely rotatable in a tube-body (2) disposed in a support member (4) attached to the chassis of the vehicle, said tube-body (2) being locked in said support member (4) by a system for adjusting (5) the position of said steering column, **characterized in that** said positioning device comprises additional guide means for the tube-body (2) in the event of an impact, which comprise an additional guide slide (9) on the support member (4), disposed on the support member (4), and comprises two U-shape guide members (10 and 11) disposed parallel to each other on the support member (4) in such manner as to receive and hold a plate (12) carried by a reinforcing member (3) of the tube-body (2), the plate (12) being attached to the two U-shape guide members (10 and 11) by fusible pins (13) ; the two guide members (10 and 11) being inclined to the support member (4) at an angle allowing correct operation of the air-bag after retraction due to breaking of the fusible pins (13) caused by the impact, said retraction resulting from sliding of the plate (12) in the two U-shaped guide members (10 and 11), such that the angle of the steering shaft (1) and the steering wheel of the vehicle with respect to the horizontal plane is smaller after retraction of the steering wheel in order to allow correct operation of an air-bag.

3. Positioning device according to any one of preceding claims, **characterized in that** the steering column is retracted by a pyrotechnic actuator (20) controlled by a collision sensor.

4. Positioning device according to claim 3, **characterized in that** the cylinder (21) of the pyrotechnic actuator (20) is mounted on the support member and the end (22) of the piston rod is connected to the tube-body (2).

## Patentansprüche

1. Vorrichtung zur Positionierung einer Lenksäule eines Kraftfahrzeuges bei einem Stoß, wobei die Lenksäule eine Lenkwelle (1), die in einem Rohrkörper (2), welcher in einem Abstützelement (4) aus einem Stück mit dem Fahrgestell des Fahrzeuges angeordnet ist, frei drehbar montiert ist, umfasst, wobei der Rohrkörper (2) in dem Abstützelement (4) durch ein Einstellungssystem (5) in Position zur Lenksäule blockiert ist, **dadurch gekennzeichnet, dass** die Vorrichtung zur Positionierung eine zusätzliche Einrichtung zur Führung des Rohrkörpers (2) im Falle eines Stoßes umfasst, die eine zusätzliche Führungsbahn (8), welche an der viereckigen Verstärkung (3) des Rohrkörpers (2) angeordnet ist, in der Verlängerung einer Längeneinstellungsführungsbahn (6), umfasst, und dadurch, dass die zusätzliche Führungsbahn (8) in Bezug auf die Längeneinstellungsführungsbahn (6) geneigt ist, derart, dass der Winkel der Lenkwelle (1) und des Lenkrades des Fahrzeuges mit der Horizontalebene nach einem Zurückziehen des Lenkrades geringer ist, um eine korrekte Funktion eines Airbags zu ermöglichen.

2. Vorrichtung zur Positionierung einer Lenksäule eines Kraftfahrzeuges bei einem Stoß, wobei die Lenksäule eine Lenkwelle (1), die in einem Rohrkörper (2), welcher in einem Abstützelement (4) aus einem Stück mit dem Fahrgestell des Fahrzeuges angeordnet ist, frei drehbar montiert ist, umfasst, wobei der Rohrkörper (2) in dem Abstützelement (4) durch ein Einstellungssystem (5) in Position zur Lenksäule blockiert ist, **dadurch gekennzeichnet, dass** die Vorrichtung zur Positionierung eine zusätzliche Einrichtung zur Führung des Rohrkörpers (2) im Falle eines Stoßes umfasst, die eine zusätzliche Führungsbahn (9) an dem Abstützelement (4) umfasst, welche an dem Abstützelement (4) angeordnet ist und zwei "U"-förmige Führungselemente (10 und 11) umfasst, die parallel zueinander an dem Abstützelement (4) angeordnet sind, derart, um eine Platte (12), welche durch die vierekkige Verstärkung (3) des Rohrkörpers (2) getragen ist, aufnehmen und halten zu können, wobei die Platte (12) aus einem Stück mit den zwei U-förmigen Führungselementen (10 und 11) durch Sicherungsstifte (13) gebildet ist, wobei die zwei Führungselemente (10 und 11) in Bezug auf das Abstützelement (4) um einen Winkel geneigt sind, der eine korrekte Funktion des Airbags nach einem Zurückziehen aufgrund des durch den Stoß hervorgerufenen Bruches der Sicherungsstifte (13) ermöglicht, wobei das Zurückziehen aus der Gleitbewegung der Platte (12) in den zwei "U"-förmigen Führungselementen (10 und 11) resultiert, derart, dass der Winkel der Lenkwelle (1) und des Lenkrades des Fahrzeuges mit der Horizontalebene nach einem Zurückziehen des Lenkrades geringer ist, um eine korrekte Funktion eines Airbags zu ermöglichen.

3. Vorrichtung zur Positionierung nach einem der vorhergehenden Ansprüche, **dadurch gekennzeichnet, dass** die Lenksäule durch eine pyrotechnische Einrichtung (20), die mittels eines Kollisionsdetektors gesteuert ist, zurückziehbar ist.

4. Vorrichtung zur Positionierung nach Anspruch 3, **dadurch gekennzeichnet, dass** der Zylinder (21) der pyrotechnischen Einrichtung (20) an dem Abstützelement (4) montiert ist und das Ende (22) der Kolbenstange an dem Rohrkörper (2) befestigt ist.
